# EUROPÄISCHE PATENTANMELDUNG

(11) **EP 0 834 443 A1**
(43) Veröffentlichungstag der Anmeldung: **08.04.1998**
(21) Anmeldenummer: 97116505.5
(22) Anmeldetag: 22.09.1997
(51) Int. Cl.: B62D 29/00

(54) **Verfahren zur Herstellung eines Hohlträgers für Fahrzeugkarosserien**

(30) Priorität: 23.09.1996 DE 19638904
(71) Anmelder: Bayerische Motoren Werke Aktiengesellschaft, 80788 München (DE); NORSK HYDRO ASA, 0240 Oslo (NO)
(72) Erfinder: Brunner, Peter, 85229 Markt Indersdorf (DE); Lechermann, Günther, 85120 Hepberg (DE); Clausen, Edvin List, 6270 Toender (DK); Ruch, Wolfgang W., Dr., 92420 Vaucresson (FR)

(57) **Zusammenfassung**

Das beschriebene Verfahren betrifft die Fertigung eines abschnittsweise mit einem Verstärkungsprofil (6) versehenen Hohlträgers 1.

Um insbesondere in den gebogenen Bereichen des Hohlträgers (1) auch dann, wenn der Gesamtprofilquerschnitt reduziert werden muß, noch eine hohe Bauteilfestigkeit und Bauteilsteifigkeit zu gewährleisten und außerdem den Fertigungsprozeß zu vereinfachen, ist in eine Hohlkammer (4) des Hohlträgers (1) ein Verstärkungsprofil eingeschoben und danach der Hohlträger (1) in seine endgültige Form gebogen worden.

## Beschreibung

Die Erfindung bezieht sich auf ein Verfahren zur Herstellung eines Hohlträgers für Fahrzeugkarosserien nach dem Oberbegriff des Patentanspruches 1.

Es ist bekannt, Hohlträger für Fahrzeugkarosserien beispielsweise dadurch zu verstärken, daß bei einem zweischaligen Hohlträger ein Stegblech eingeschweißt wird. Ferner ist es bekannt, beispielsweise bei A-Säulen von Cabriolets, im Inneren des Säulenquerschnitts noch ein zusätzliches Rohr anzubringen, um die Stabilität der A-Säule bei einem Überschlag zu erhöhen.

Werden Strangpreßprofile als Hohlträger verwendet, so werden solche Profile für den maximalen Lastfall ausgelegt bzw. dimensioniert. Dies bedeutet, daß viel Material und Querschnitt über die gesamte Bauteillänge vorhanden ist.

Der Erfindung liegt die Aufgabe zugrunde, ein Verfahren anzugeben, mit dem Hohlträger bedarfsweise im Profilquerschnitt reduziert werden können, wobei trotzdem in belastungskritischen Bereichen eine hohe Stabilität und Festigkeit gegeben sein soll.

Diese Aufgabe wird erfindungsgemäß bei einem Verfahren nach dem Oberbegriff des Patentanspruches 1 durch die im Kennzeichen dieses Patentanspruches angegebenen Maßnahmen gelöst.

Vorteilhafte Einzelheiten des neuen Verfahrens sind Gegenstand von Unteransprüchen.

Es lassen sich mit dem neuen Verfahren beispielsweise durch das Package bedingte Querschnittsverminderungen realisieren, ohne daß dies eine Reduzierung der Bauteilsicherheit mit sich bringen würde. Bei stark gekrümmten Bauteilen, etwa am seitlichen Windlauf oder am Dachrahmen, kann der Hohlträger dank des Verstärkungsprofiles hohen Biegebeanspruchungen widerstehen, ohne daß der Hohlträger vorzeitig einknickt. Bei besonders langen Hohlträgern können dann, wenn nur örtlich hohe Steifigkeiten erforderlich sind, Gewichtsvorteile verwirklicht werden.

Auch beim Verformen des Hohlträgers ergeben sich in stark gebogenen Bereichen Vorteile, weil durch das innen satt anliegende Verstärkungsprofil der Profilquerschnitt "stehen" bleibt und nicht flachgedrückt wird. Nach der Biegeoperation, die in mehreren Ebenen erfolgen kann, entsteht eine formschlüssige Verbindung, ohne daß eine nachträgliche oder zusätzliche Verbindung erforderlich ist.

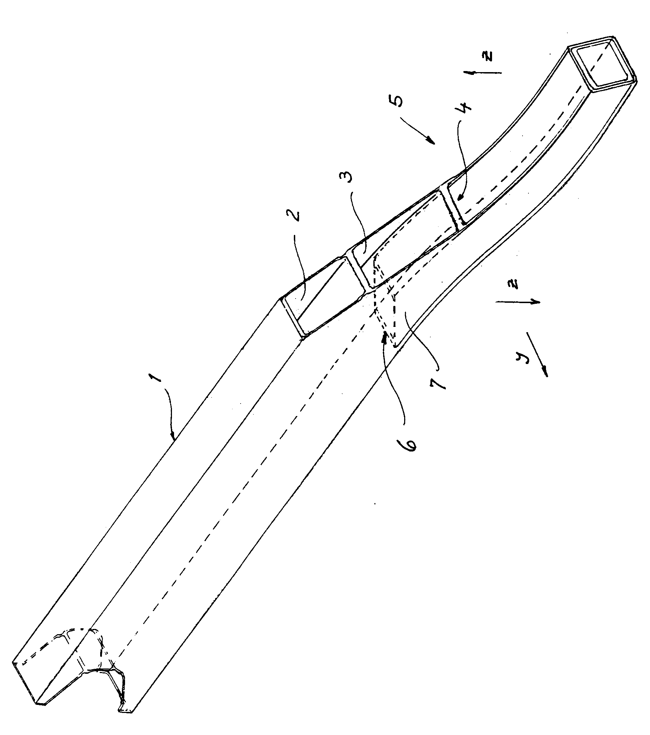

Die Erfindung ist im folgenden anhand eines in der Zeichnung dargestellten Ausführungsbeispiels näher erläutert. Die einzige Figur zeigt in perspektivischer Darstellung einen Pkw-Längsträger.

Der in der Zeichnung dargestellte Längsträger ist ein dreizelliger Hohlträger 1 mit einer oberen Kammer 2, einer mittleren Kammer 3 und einer unteren Kammer 4.

Aus Package-Gründen muß der dargestellte Hohlträger 1 in seinem vorderen Bereich in seiner Bauhöhe deutlich reduziert sein. Der Hohlträger 1 ist in dem vorderen Bereich 5 mehrfach in Z-Richtung, aber auch in Y-Richtung, gebogen. Derart gebogene Trägerbereiche sind hinsichtlich ihrer Festigkeit, beispielsweise bei einem Frontalcrash, kritisch. Um bei einer solchen Belastungssituation einem Biegeversagen vorzubeugen, ist in der untersten Kammer 4 des Hohlträgers 1 ein Verstärkungsprofil 6 angeordnet.

Das Verstärkungsprofil 6 ist wie der Hohlträger 1 aus einem Aluminium-Strangpreßprofil gefertigt und vor dem Verformen des Hohlträgers 1 in die untere Kammer 4 dieses Trägers eingeschoben worden. Es ist paßgenau in die Kammer 4 eingefügt, wozu das Verstärkungsprofil 6 in seiner äußeren Querschnittsform, die bei dem dargestellten Ausführungsbeispiel rechteckig ist, dem Innenquerschnitt der Hohlkammer 4 des Hohlträgers 1 entspricht. Wie schon weiter oben erwähnt, kann der mit dem Verstärkungsprofil 6 versehene Hohlträger 1 auf sehr verschiedene Weise umgeformt werden, beispielsweise in einem Streck-, Preß und/oder Rollbiege-Umformprozeß.

Wie man in der Zeichnung erkennt, sind im vorderen Bereich 5 des Hohlträgers 1 die Kammern 2 und 3 - mit allmählichem Übergang - entfernt. Das Verstärkungsprofil 6 ist in der noch verbleibenden Kammer 4 angeordnet. Dabei ist das Verstärkungsprofil 6 an seinem inneren Ende 7 schräg beschnitten. Auf diese Weise wird ein zu großer Steifigkeitssprung des Gesamtprofiles im Bereich des inneren Endes des Verstärkungsprofiles 6 vermieden.

## Patentansprüche

1. Verfahren zur Herstellung eines Hohlträgers für Fahrzeugkarosserien, mit einem zumindest abschnittsweise in einer Hohlkammer angeordneten Verstärkungsprofil, dadurch gekennzeichnet, daß das Verstärkungsprofil (6) in eine Hohlkammer (4) des Hohlträgers (1) eingeschoben ist und danach der Hohlträger (1) in seine Sollform verformt wird.

2. Verfahren nach Anspruch 1, dadurch gekennzeichnet, daß das Verstärkungsprofil (6) in seiner äußeren Querschnittsform dem Innenquerschnitt einer Hohlkammer (4) des Hohlträgers (1) entspricht.

3. Verfahren nach Anspruch 1, dadurch gekennzeichnet, daß der mit dem Verstärkungsprofil (6) versehene Hohlträger (1) einem Streck-, Preß- und/oder Rollbiege-Umformprozeß unterworfen ist.

4. Verfahren nach Anspruch 1, dadurch gekennzeichnet, daß das Verstärkungsprofil (6) in einer Kammer (4) eines mehrkammerigen Hohlträgers (1) angeordnet und die restlichen Hohlkammern (2, 3) abschnittsweise entfernt werden.

5. Verfahren nach Anspruch 1, dadurch gekennzeichnet, daß der Hohlträger (1) in mehrere Richtungen (Y, Z) gebogen wird.

6. Verfahren nach Anspruch 1, dadurch gekennzeichnet, daß das Verstärkungsprofil (6) an seinem inneren Ende (7) schräg beschnitten ist.
